# EUROPEAN PATENT APPLICATION

(11) **EP 1 591 226 A1**
(43) Date of publication of application: **02.11.2005**
(21) Application number: 05075902.6
(22) Date of filing: 18.04.2005
(51) Int. Cl.: B29C 49/56, B29C 49/42

(54) **Machine for forming plastic containers with a linear motor for moving the mould-support unit**

(30) Priority: 27.04.2004 IT MI20040835
(71) Applicant: Magic MP S.p.A., Carate Brianza (MI) (IT)
(72) Inventor: Giacobbe, Ferruccio, Monza (MI) (IT)
(74) Representative: Raimondi, Margherita

(57) **Abstract**

Machine for forming containers (3a), comprising a unit (2) for extruding plastic tubes (3), a blowing unit (5), a mould for containing the containers (3a), formed by two half-moulds (4a, 4b) movable, upon actuation of associated first means (100), in a longitudinal direction (X-X) and symmetrically with respect to a fixed axis (Z-Z) perpendicular to said longitudinal direction, the unit formed by the mould (4) and by the associated first actuating means (100) being movable, upon actuation of second actuating means (200), in a transverse direction (Y-Y) from a first position, in substantial alignment with the extrusion unit, into a second position, in substantial alignment with the blowing unit, and vice versa, said second means (200) for actuation of the mould (4) in the transverse direction comprising at least one linear motor (210, 220).

## Description

The present invention relates to a machine for blow-moulding plastic containers, having at least one linear motor for moving the mould-support unit.

It is known in the technical sector relating to the packaging of liquid products and the like that there is a need to manufacture plastic containers suitable for this purpose.

It is also known that said containers are formed in suitable blow-moulding machines having corresponding moulds (formed by two movable half-moulds) into which a plastic tube extruded upstream of the mould is introduced and blown.

These machines envisage the use of oil-hydraulic components for movement of the various movable parts and, although fulfilling their function, have certain drawbacks, essentially arising from the contamination which the pressurised oil inevitably causes in the surrounding environment and on the various parts of the machine, thereby making the latter substantially unsuitable for use in the pharmaceutical and/or food industry.

The document EP 1,306,193 in the name of the same present Applicant also discloses a machine for forming plastic containers, comprising a unit for extruding plastic tubes, a blowing unit, a mould for containing the containers, formed by two half-moulds movable upon actuation of associated first means, in a longitudinal direction and symmetrically with respect to a fixed axis perpendicular to said longitudinal direction, the unit formed by the mould and the associated first actuating means being movable, upon actuation of associated second actuating means, in a transverse direction from a first position, corresponding to positioning of the mould underneath the extrusion unit, into a second position corresponding to positioning of the mould underneath the blowing unit, and vice versa, said first means for actuation in the longitudinal direction being of the electrical type.

This machine envisages, however, that the movement of the mould-support unit in the transverse direction is performed via mechanical means comprising a gear motor and a connecting-rod/crank lever mechanism movable from a first end-of-travel position, corresponding to the said position of the mould coaxial with the unit for extrusion of the extruded tubes, into a second end-of-travel position, corresponding to the position of the mould substantially coaxial with the blowing unit.

Although fulfilling its function, this machine nevertheless results in the need for fixed dimensions defined during the design stage, these dimensions corresponding to the specific format of the mould and/or the interaxial distance of the extruded tubes, this resulting essentially in the production of a large variety of different machines, it being substantially impossible, owing to the mechanical inertia of the masses involved, to vary the two opposite end-of-travel limits of the connecting-rod/crank unit, in order to adapt the movement to different forms of mould/interaxial distance of the extruded tubes and/or obtain a reduction in the transverse travel of the mould with a corresponding reduction in the idle time of the machine.

The technical problem which is posed, therefore, is that of providing a machine for blow-moulding plastic containers from extruded tubes, which is able to allow easy and rapid adaptation thereof to different configurations in the format of the mould and/or the interaxial distance of the extruded tubes to be blown without the need for substantial modification of the original machine.

Within the scope of this problem it is also required that this machine should have small dimensions, be easy to assemble and allow access to the various parts as well as permit a substantial reduction in the normal maintenance operations.

These results are obtained according to the present invention by a machine for forming containers, comprising a unit for extruding plastic tubes, a blowing unit, a mould for containing the containers, formed by two half-moulds, movable upon actuation of associated first means, in a longitudinal direction (X-X) and symmetrically with respect to fixed axis (Z-Z) perpendicular to said longitudinal direction, the unit formed by the mould and by the associated first actuating means being movable, upon actuation of second actuating means, in a transverse direction (Y-Y) from a first position, in substantially alignment with the extrusion unit, into a second position in substantial alignment with the blowing unit, and vice versa, said second means for actuation of the mould in the transverse direction comprising at least one linear motor.

Further details may be obtained from the following description of a non-limiting example of embodiment of the subject of the present invention provided with reference to the accompanying drawings in which:
- Figure 1 shows a schematic front view of the machine according to the invention during removal of the extruded tubes;
- Figure 2 shows a partially sectioned side view of the machine shown in Figure 1;
- Figure 3 shows a schematic perspective view of the detail of the linear motor for moving the mould-support unit in the transverse direction;
- Figure 4 shows a schematic front view of the machine according to the invention during moulding;
- Figure 5 shows the operating sequence relating to a first format/interaxial distance of the mould/extruded tubes and;
- Figure 6 shows the different set-up of the machine for a second different format/interaxial distance of the mould/extruded tubes.

As shown, the machine according to the invention envisages a support frame comprising uprights 1 and cross-members 1a having, constrained thereto, the means 2 for extrusion of the plastic tube 3, the means 100 for opening/closing the mould 4 in the longitudinal direction X-X, the means 200 for moving the mould 4 in the transverse direction Y-Y, the blowing nozzles 5 and the means 6 for unloading the formed containers 3a.

Said mould 4 is formed by two half-moulds 4a, 4b which are symmetrically arranged with respect to a fixed reference axis of symmetry Z-Z.

In greater detail, said means 100 for movement in the longitudinal direction X-X comprise an electric motor 101, in the example arranged parallel to the axis Z-Z, the shaft 101a of which has, mounted thereon, a gearwheel 101b suitable for use with a transmission unit schematically shown as a pair of connecting rods 104a, 104b, the head of which is pivotably mounted on one end of a respective rod 105a, 105b.

While the upper rod 105a is directly constrained to the carriage 106a, supporting the half-mould 4a sliding on a rail 107, the lower rod 105a is connected to the carriage 106b, supporting the half-mould 4b sliding on the same rail 107, via the intervening arrangement of a device 110 for regulating the distance of the two half-moulds with respect to the fixed axis of symmetry Z-Z.

Said regulating device 110 comprises a splined shaft 113 extending parallel to the longitudinal axis of the machine.

The rear end of the splined shaft 113 is provided with a screw/female-thread system 122a for coupling together the said splined shaft and a support 122 in turn integral with a slide 120 movable on longitudinal rails 121, which slide supports the entire part of the actuating unit 100 formed by the kinematic chain consisting of motor 101 / rods 105a, 105b.

The pitch of the front screw/female-thread coupling 112a is twice the pitch of the rear screw/female-thread coupling 122a and the direction of the two couplings is opposing so as to produce correct relative displacement of the two carriages 106a, 106b, as will appear more clearly below.

The front end of the splined shaft 113 is provided with a motor 113a for actuating the said shaft.

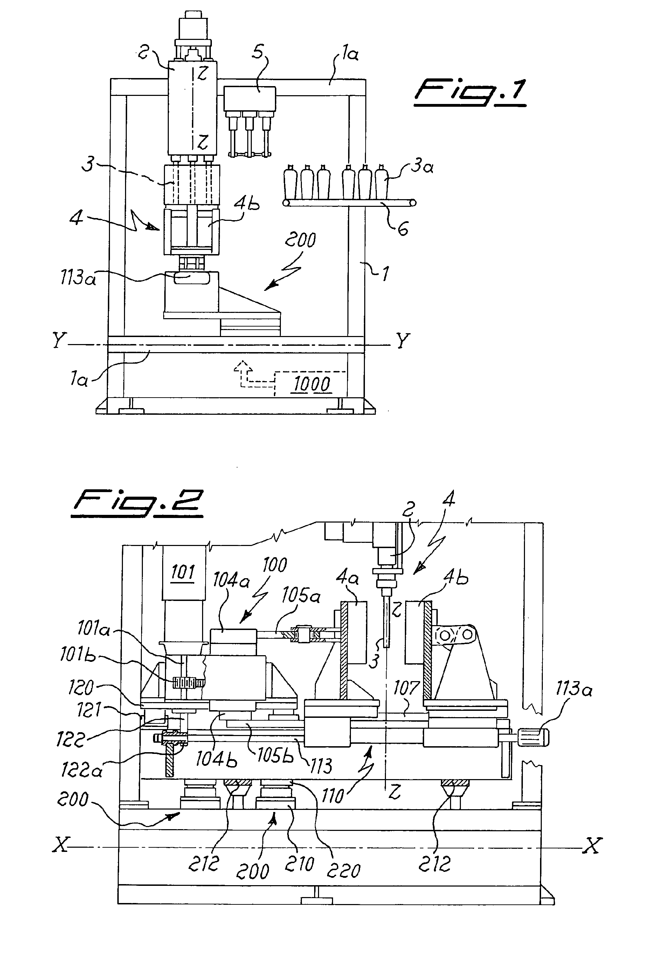

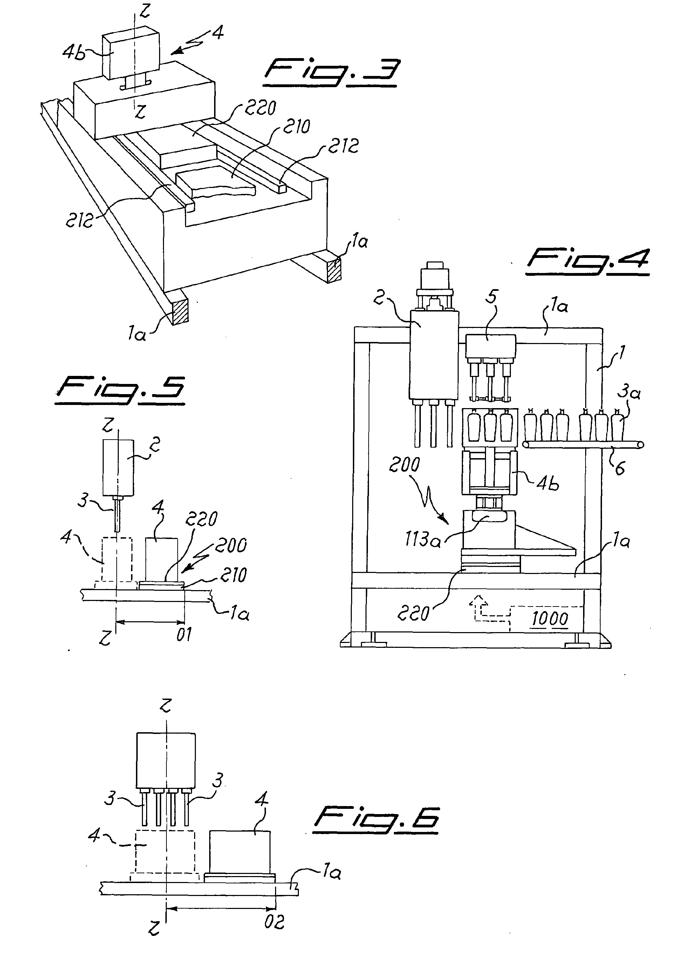

Said devices 200 for displacing the mould unit in the transverse direction Y-Y (Fig. 3) consist of at least one linear motor comprising a magnetic rail 210 integral with a bench 211 fixed to the cross-members 1a of the structure 1 of the machine.

The bench 211 also has, constrained to it, longitudinal rails 212 for guiding a carriage 2 supporting the mould 4 and a motive element 200 of the linear motor having, arranged inside it, the electrical windings (not shown), excitation of which causes start-up of the linear motor.

With this configuration and as shown in Figure 4, the movement of the mould in the longitudinal direction is performed as follows:
- with the machine at a standstill and depending on the thickness of the mould 4 in the longitudinal direction, the front motor 113a is activated in order to cause:

- either rotation of the front coupling 112a in one direction or the other with consequent displacement of the carriage 106b away from or towards the axis Z-Z;
- or rotation, in the opposite direction and with the half the pitch, of the rear coupling 122a so as to cause displacement of the slide 120 and therefore the carriage 106a by a same amount towards or away from the said axis Z-Z;
thus ensuring the correct relative position of the two half-moulds 4a, 4b for perfect closing following operation by the motor 101.

Said operation is performed as follows:
- in a coordinated and controlled sequence by suitable programming and control means 1000;
- the motor 101 is activated (Figs. 1, 2) so as to cause rotation of the upper connecting rod 104a and the lower connecting rod 104b so that the carriage 106a and the carriage 106b are respectively pushed and pulled away in a symmetrical manner from the axis Z-Z so as to cause opening of the two half-moulds 4a, 4b;
- the entire mould-support unit 4 is brought underneath the extruded plastic tubes 3 by the actuating means 200;
- the motor 101 is activated in the opposite direction to the previous direction so as to cause the counter-rotation of the two connecting rods 104a, 104b so that the carriages 106a and 106b are respectively pushed and pulled towards the axis of symmetry Z-Z in order to cause closure of the two half-moulds 4a, 4b around the tubes 3;
- the devices 200 for performing displacement in the transverse direction Y-Y of the entire moulding unit are actuated so as to cause displacement of the said unit underneath the blowing station 5 where forming of the containers is performed;
- the actuating unit 100 is operated again for opening in the longitudinal direction so as to cause opening of the two half-moulds 4a, 4b and allow unloading of the formed containers 3a by means of associated unloading means 6 and renewal of the cycle described above.

From Figs. 5 and 6 it can also be seen how the linear motor allows extremely easy variation of the starting point 01, 02 of the transverse travel of the mould 4 from the position aligned with the axis Z-Z of the extruded tubes 3, into the position aligned with the axis of the blowing station 5, making it possible to achieve a high productivity both in the case of an individual extruded tube (Fig. 5) and in the case of several extruded tubes (Fig. 6) and vice versa, this not being possible with the known machines where, when changing over from an individual extruded tube to several extruded tubes, it is required to provide new dimensions for the whole machine, whereas when changing over from several extruded tubes to an individual/smaller number of tubes, it is required in any case to maintain a transverse travel of the mould corresponding to the maximum nominal travel, even though a large part of this travel is not useful and increases the idle time of the production cycle to the detriment of the productivity.

It is obvious, moreover, how the machine according to the invention also allows an increase in the speed of displacement of the mould-support unit in the transverse direction, also increasing the positioning precision owing to elimination of the movement transmission lever mechanisms and therefore the associated play resulting from wear thereof; in addition to this, the elimination of the lever mechanisms also allows a reduction in the operations for maintenance and lubrication of the moving parts.

In addition to this, owing to the presence of the motor 113a for performing regulation of the relative position of the two half-moulds 4a,4b, it is possible to determine a pre-tensioning force for closing the said half-moulds in relation to the shearing force required in each case, depending on the measurement of the linear development of the waste eliminated during closing of the mould.

It is envisaged, moreover, that the linear motor 200 may be controlled by means of the programming devices which are schematically denoted by 1000 in Fig. 1 and which may be of the electromechanical, electronic and/or processing program type.

Although shown in the configuration envisaged with a pair of linear motors 200, it is envisaged that the machine may be equipped with a single linear motor suitably arranged in a central position with respect to the mould-support unit to be displaced.

In a further preferred embodiment it is envisaged that the magnetic rail 210 is integral with the mould-support unit, while the motive element 211 (which therefore becomes a stator) is integral with the fixed bench 211 on which the longitudinal rails 212 (Fig. 2) for guiding the carriage 2 integral with the mould-support unit are also constrained.

With this configuration it is possible to obtain the further advantages arising from having a fixed motive element (stator); consequently the wiring leads may also be kept fixed, with the result that they are shorter and are more durable and reliable; at the same time the magnetic rail is protected from the contamination resulting from any dripping of lubricants and the like.

## Claims

1. Machine for forming containers (3a), comprising a unit (2) for extruding plastic tubes (3), a blowing unit (5), a mould for containing containers (3a), formed by two half-moulds (4a, 4b) movable, upon actuation of associated first means (100), in a longitudinal direction (X-X) and symmetrically with respect to a fixed axis (Z-Z) perpendicular to said longitudinal direction, the unit formed by the mould (4) and by the associated first actuating means (100) being movable, upon actuation of second actuating means (200), in a transverse direction (Y-Y) from a first position, in substantial alignment with the extrusion unit, into a second position in substantial alignment with the blowing unit, and vice versa, **characterized in that** said second means (200) for actuation of the mould (4) in the transverse direction comprise at least one linear motor (210, 220).

2. Machine according to Claim 1, **characterized in that** said linear motor comprises at least one magnetic rail (210) integral with a bench (211) fixed to the cross-members (1a) of the structure (1) of the machine.

3. Machine according to Claim 1, **characterized in that** said linear motor comprises at least one magnetic rail (210) integral with the mould-support unit (4) of the machine.

4. Machine according to Claim 1, **characterized in that** it comprises longitudinal rails (212) for guiding a carriage (2) supporting the mould unit (4).

5. Machine according to Claim 4, **characterized in that** said rails are inside the bench (211).

6. Machine according to Claim 4, **characterized in that** said rails are outside the bench (211).

7. Machine according to Claim 1, **characterized in that** said linear motor (200) comprises a motive element (220) which has, arranged inside it, the electrical windings, excitation of which causes start-up of the linear motor.

8. Machine according to Claims 7 and 3,
**characterized in that** said motive element (220) is integral with the mould-support unit (4).

9. Machine according to Claim 7 and 4,
**characterized in that** said motive element (220) is integral with the fixed bench (211) constrained to the structure (1) of the machine.

10. Machine according to claim 1, **characterized in that** said first means (100) for moving the two half-moulds consist of an electric motor (101), the shaft (101a) of which is integral with a transmission unit connected to associated carriages (6a, 6b) supporting the two half-moulds.

11. Machine according to Claim 10, **characterized in that** said first actuating means (100) are mounted on a slide (120) movable in the longitudinal direction on associated fixed rails (121).

12. Machine according to Claim 11, **characterized in that** it comprises means (110) arranged between the said slide (120) and the front carriage (6b) for regulating the relative distance of the two half-moulds (4a, 4b) from a fixed axis of symmetry (Z-Z) along which closing of the mould occurs.

13. Machine according to Claim 12, **characterized in that** said means (110) for regulating the relative distance of the two half-moulds (4a, 4b) comprise a sleeve (112) parallel to the longitudinal direction (X-X) and having a first end integral with the rod (105b) actuating the front carriage (106b) and the other end constrained to the base of the said carriage (106b) by means of a screw/female-thread coupling.

14. Machine according to Claim 13, **characterized in that** said sleeve (112) is passed through by a splined shaft (113) extending parallel to the longitudinal axis of the machine.

15. Machine according to Claim 14, **characterized in that** the rear end of the splined shaft (112) is provided with a screw/female-thread system (122a) for coupling together the said splined shaft and a support (122) in turn integral with said slide.

16. Machine according to Claim 15, **characterized in that** the pitch of the front screw/female-thread coupling (122a) is twice the pitch of the rear screw/female-thread coupling (122a) and the direction of the two couplings is opposing.

17. Machine according to Claim 16, **characterized in that** the front end of the splined shaft (113) is provided with a controlled motor (113a) for actuating the said shaft.
